# EUROPEAN PATENT APPLICATION

(11) **EP 2 168 818 A1**
(43) Date of publication of application: **31.03.2010**
(21) Application number: 09171768.6
(22) Date of filing: 30.09.2009
(51) Int. Cl.: B60R 16/02, H02G 3/00

(54) **Device for electrifying actuator assemblies and manufacturing method associated therewith**

(30) Priority: 30.09.2008 IT FI20080049 U
(71) Applicant: Sistema S.r.l., 50018 SCANDICCI (IT)
(72) Inventor: Valeriani, Roberto, 59124 Firenze (IT)
(74) Representative: Borsano, Corrado

(57) **Abstract**

The present invention relates to a device for electrifying actuator assemblies and to the manufacturing method associated therewith, said device being made in one piece by molding, and then insulated by depositing an insulating covering made of plastic material.

## Description

### Field of the invention

The present invention refers to the technical field of actuator assemblies, with particular reference to the wiring harnesses of actuator assemblies used in the automotive industry.

### State of the art

Actuator assemblies for actuating mechanisms and controls adapted to transmit motion between the various members belonging to a device or apparatus are widely used in several industrial fields. One example is the automotive field, in which actuator assemblies are used for electromechanically controlling the handling of devices, such as window winders or door locks or windshield wipers.

Said actuator assemblies often contain electric motors, switches, switchgears and electric wiring harnesses which connect the various parts allowing the operation of the actuator assembly as a whole. Said actuator assemblies are often assembled in appropriate containers made of plastic or metal material, appropriately provided with inner shapes adapted to accommodate the various components of the actuator assembly and the wiring harnesses intended to interconnect said components.

Indeed, from the point of view of manufacturing the aforesaid actuator assemblies, the wiring harnesses are the most complex and the most difficult part to be managed. They indeed must be separately machined from electric wires of appropriate cross-section, which are cut, butted to appropriate terminals, gathered with appropriate blocking means and finally appropriately shaped to be adapted to the paths defined by the inner shapes of the aforesaid actuator assembly containers. Moreover, said wiring harnesses are often further secured to the container by means of resin or glue so as to ensure their stability even in environments subject to strong vibrations and accelerations. The preparation of wiring harnesses is long, articulated and complex and always offers the possibility of errors by the operators who deal with their production and installation. The need for a method of connecting the various components of any actuator assembly which overcomes the described drawbacks related to wiring harnesses of the traditional type is therefore apparent.

### Brief description of the drawings

Fig. 1 shows an example of a device for electrifying actuator assemblies according to the present invention.
Fig. 2 shows the example of the device for electrifying actuator assemblies in Fig. 1, complete with protective covering.
Fig. 3 shows the example of the device for electrifying actuator assemblies in Fig. 1, complete with protective covering and connected components.

### Summary of the invention

The present invention relates to a device for electrifying actuator assemblies which is made by molding and comprises an insulating coating made by injection co-molding.

### Detailed description of the invention

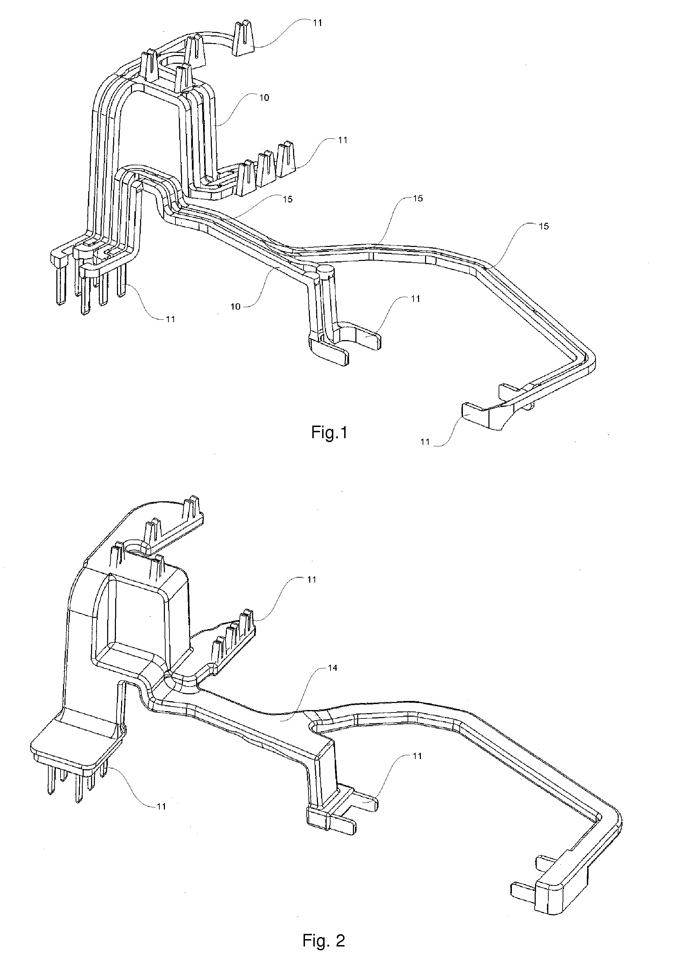

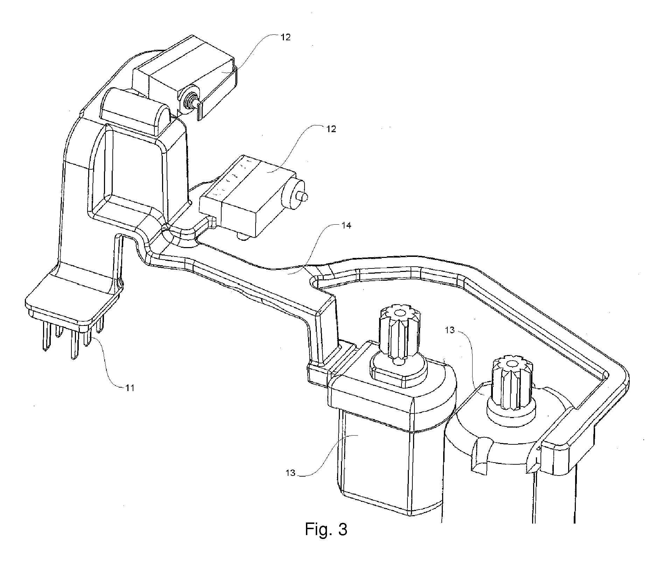

A device according to the present invention, an embodiment of which is illustrated in Fig. 1-3, comprises a plurality of electric leads 10, appropriately shaped and comprising, in turn, appropriate terminals 11 adapted to allow the connection thereof to external electric, electromechanical components 12, 13. Said device further comprises an insulating covering 14 made of plastic material and adapted to insulate said plurality of leads 10 while leaving said terminals 11 uncovered.

Said plurality of leads is preferably formed by means of a molding process and comprise a plurality of connecting sections 15 between adjacent leads belonging to said plurality of leads. Said connecting sections 15 are adapted to ensure the mechanical stability of said plurality of leads during their manufacturing and are interrupted by shearing before depositing said insulating covering 14. Furthermore, said plurality of wires may be advantageously shaped so as to form housings capable of accommodating said external electric, electromechanical components 12, 13.

Said plurality of leads is preferably made in one piece pressed either in light alloy or conductive plastic material, e.g. by die-casting. Said light alloy may be a light copper and magnesium-based alloy, such as zama alloys, for example.

Furthermore, in a preferred embodiment of the device according to the present invention said insulating covering 14 made of plastic material is made by means of a co-molding process.

The described device is more robust and more reliable than traditional wiring harnesses and enormously simplifies the production and installation operations, with consequent saving in terms of manufacturing time and costs. Furthermore, the device in accordance with the present invention does not require the usual gluing or resin-application operation required for traditional wiring harnesses, thus rationalizing and further simplifying the assembling and installing procedure of the wiring harness itself.

The method of manufacturing the above-described device for electrifying actuator assemblies, object of the present application, comprises the following steps:
- molding, preferably by die-casting, a plurality of electric leads 10 comprising appropriate terminals 11 adapted to allow its connection with external electric, electromechanical components 12, 13; a plurality of connecting sections 15 between adjacent leads belonging to said plurality of leads and appropriate shapes to facilitate the assembly thereof inside the actuator assembly container and possibly to accommodate said external electric, electromechanical components 12, 13;
- interrupting said connecting sections 15 between adjacent leads belonging to said plurality of leads, preferably by shearing, so as to electrically insulate said adjacent leads;
- depositing an insulating covering on said plurality of leads, said covering being preferably made of plastic material and carried out by co-molding.

## Claims

1. A method for manufacturing devices for electrifying actuator assemblies **characterized in that** it comprises the following steps:
a) Molding, in light alloy or conductive plastic material and in one piece, a plurality of electric leads (10) comprising appropriate terminals (11) adapted to allow its connection with external electric, electromechanical components (12, 13); a plurality of connecting sections (15) between adjacent leads belonging to said plurality of leads and appropriate shapes adapted to facilitate their assembly inside the targeted actuator assembly container and possibly to accommodate said external electric, electromechanical components (12, 13);
b) Interrupting said connecting sections (15) between adjacent leads belonging to said plurality of leads so as to electrically insulate said adjacent leads;
c) Depositing an insulating covering on said plurality of leads.

2. A method according to claim 1, **characterized in that** the molding in step a) is carried out by die-casting.

3. A method according to claims 1-2, **characterized in that** said light alloy in step a) is a light copper and magnesium-based alloy, as zama alloys.

4. A method according to claims 1-3, **characterized in that** said connection sections (15) between adjacent leads in step b) are interrupted by shearing.

5. A method according to claim 1-4, **characterized in that** the covering in step c) is made of plastic material.

6. A method according to claims 1-5, **characterized in that** the covering in step c) is made by means of a co-molding process.

7. A device for electrifying actuator assemblies, comprising a plurality of appropriately shaped electric leads (10) comprising, in turn, some terminals (11) adapted to allow the connection with external electric, electromechanical components (12, 13).

8. A device according to claim 7, **characterized in that** the shaping of said plurality of leads is further adapted to form housings capable of accommodating said external electric, electromechanical components (12, 13).

9. A device according to claims 7-8, **characterized in that** it further comprises an insulating covering (14) made of plastic material adapted to insulate said plurality of leads (10) thus leaving said terminals uncovered (11).

10. A device according to claims 7-9, **characterized in that** it is made of light alloy or conductive plastic material.
